# EUROPEAN PATENT APPLICATION

(11) **EP 4 425 753 A1**
(43) Date of publication of application: **04.09.2024**
(21) Application number: 21962308.9
(22) Date of filing: 25.10.2021
(51) Int. Cl.: H02K 1/2746

(54) **ROTOR, ELECTRIC MOTOR, FAN, AND AIR CONDITIONER**

(71) Applicant: MITSUBISHI ELECTRIC CORPORATION, Chiyoda-ku Tokyo 100-8310 (JP)
(72) Inventor: SHIMOKAWA, Takaya, Tokyo 100-8310 (JP); WATANABE, Takanori, Tokyo 100-8310 (JP); TAKAHASHI, Ryogo, Tokyo 100-8310 (JP); YABE, Koji, Tokyo 100-8310 (JP)
(74) Representative: Pfenning, Meinig & Partner mbB
(86) International application number: PCT/JP2021/039271
(87) International publication number: WO 2023/073757

(57) **Abstract**

A rotor has N/2 (N is an even number) magnet magnetic poles and N/2 virtual magnetic poles. The rotor includes: a rotor core having an annular shape about an axis; and a plurality of permanent magnets attached to the rotor core. Each of the N/2 magnet magnetic poles is formed by at least one permanent magnet of the plurality of permanent magnets, and each of the N/2 virtual magnetic poles is formed by the rotor core. A pole center line of each magnet magnetic pole is defined by a line passing through a center of the magnet magnetic pole in a circumferential direction of the rotor core and the axis. The at least one permanent magnet forming the magnet magnetic pole has a first corner facing an outer circumference of the rotor core and located farthest from the pole center line on one side of the pole center line, and a second corner facing the outer circumference and located farthest from the pole center line on the other side of the pole center line. An angle θm between a line passing through the first corner and the axis and a line passing through the second corner and the axis satisfies θm ≥ 360/N [degrees].

## Description

### TECHNICAL FIELD

The present disclosure relates to a rotor, a motor, a fan, and an air conditioner.

### BACKGROUND ART

In recent years, motors with consequent-pole type rotors have been developed. In the consequent-pole type rotors, magnet magnetic poles are formed by permanent magnets attached to a rotor core, and virtual magnetic poles are formed by parts of the rotor core (see, for example, Patent Reference 1).

### PRIOR ART REFERENCE

### PATENT REFERENCE

Patent Reference 1: International Publication No. WO 2020/003341 (see FIG. 2)

### SUMMARY OF THE INVENTION

### PROBLEM TO BE SOLVED BY THE INVENTION

Recently, with the increase in output of motors, there has been a demand to increase the magnetic force of permanent magnets. To increase the magnetic force of a permanent magnet, it is necessary to increase the amount of magnetic flux by enlarging the area of a magnetic pole surface of the permanent magnet. On the other hand, if the permanent magnet is lengthened in the axial direction, the length of the motor in the axial direction must be increased accordingly, leading to an increase in the manufacturing cost.

The present disclosure is made to solve the above-described problem and is intended to increase the magnetic force of a permanent magnet while suppressing an increase in the manufacturing cost.

### MEANS OF SOLVING THE PROBLEM

A rotor of the present disclosure includes N/2 (N is an even number) magnet magnetic poles and N/2 virtual magnetic poles. The rotor includes a rotor core having an annular shape about an axis, and a plurality of permanent magnets attached to the rotor core. Each of the N/2 magnet magnetic poles is formed by at least one permanent magnet of the plurality of permanent magnets, and each of the N/2 virtual magnetic poles is formed by a part of the rotor core. A pole center line of each magnet magnetic pole is defined by a line passing through the axis and a center of the magnet magnetic pole in a circumferential direction of the rotor core. The at least one permanent magnet forming the magnet magnetic pole has a first corner facing an outer circumference of the rotor core and located farthest from the pole center line on one side of the pole center line, and a second corner facing the outer circumference and located farthest from the pole center line on the other side of the pole center line. An angle θm between a line passing through the first corner and the axis and a line passing through the second corner and the axis satisfies θm ≥ 360/N [degrees] .

### EFFECTS OF THE INVENTION

According to the present disclosure, the area of the magnetic pole surface of the permanent magnet per unit length in the axial direction can be increased because the angle θm is 360/N [degrees] or more. As a result, the magnetic force of the permanent magnet can be increased while suppressing the increase in the manufacturing cost.

### BRIEF DESCRIPTION OF THE DRAWINGS

FIG. 1 is a cross-sectional view illustrating a motor of a first embodiment.
FIG. 2 is a cross-sectional view illustrating a rotor of the first embodiment.
FIG. 3 is an enlarged diagram illustrating a part of the rotor of the first embodiment.
FIG. 4 is a diagram for explaining the arrangement of magnetic poles in the rotor of the first embodiment.
FIG. 5(A) is a diagram illustrating a magnet magnetic pole in the rotor of the first embodiment, and FIG. 5(B) is an enlarged diagram illustrating a region including an end of the permanent magnet.
FIG. 6 is a schematic diagram illustrating magnetic flux flowing through each magnetic pole in the rotor of the first embodiment.
FIG. 7 is a cross-sectional view illustrating another configuration example of the rotor of the first embodiment.
FIG. 8 is an enlarged cross-sectional view illustrating a part of the rotor illustrated in FIG. 7.
FIG. 9 is a longitudinal sectional view illustrating the motor of the first embodiment.
FIG. 10 is a cross-sectional view illustrating a rotor of a modification 1.
FIG. 11 is a cross-sectional view illustrating a rotor of a modification 2.
FIG. 12 is a cross-sectional view illustrating a rotor of a second embodiment.
FIG. 13 is an enlarged cross-sectional view illustrating a part of the rotor illustrated in FIG. 12.
FIG. 14(A) is a diagram illustrating an air conditioner to which the motor of each embodiment can be applied, and FIG. 14(B) is a sectional view illustrating an outdoor unit of the air conditioner.

### MODE FOR CARRYING OUT THE INVENTION

### First Embodiment

### (Configuration of Motor 2)

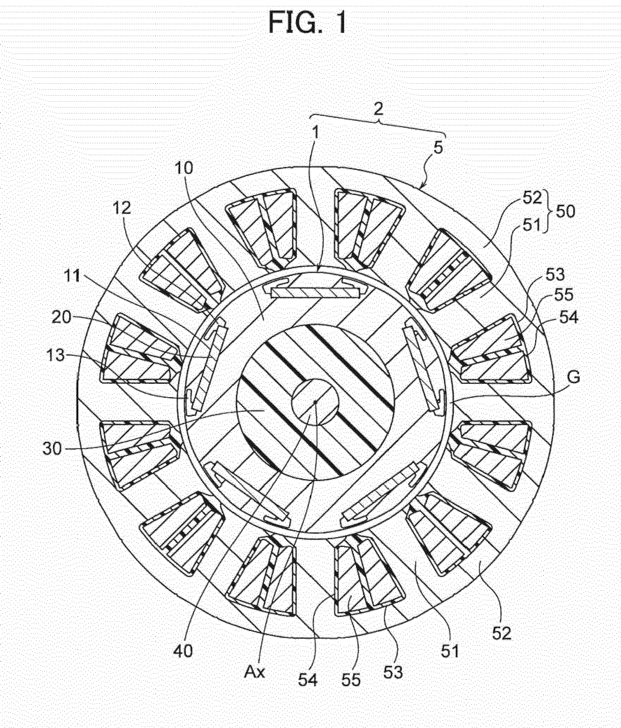

FIG. 1 is a cross-sectional view illustrating a motor 2 of a first embodiment. The motor 2 is an inner rotor type motor including a rotatable rotor 1 and a stator 5 having an annular shape and provided to surround the rotor 1. An air gap G of, for example, 0.4 to 0.7 mm, is provided between the stator 5 and the rotor 1.

Hereinafter, an axis serving as the rotation center of the rotor 1 is referred to as an axis Ax, and the direction of the axis Ax is referred to as an "axial direction". The circumferential direction about the axis Ax is referred to as a "circumferential direction", and the radial direction about the axis Ax is referred to as a "radial direction". In this regard, FIG. 1 is a cross-sectional view of the rotor 1 in a plane perpendicular to the axis Ax.

### (Configuration of Stator)

The stator 5 includes a stator core 50 and coils 55 wound on the stator core 50. The stator core 50 is formed of magnetic stacking elements which are stacked in the axial direction and fixed together by crimping or the like. Each stacking element is made of a core material containing iron (Fe) as a main component, for example, an electromagnetic steel sheet. The thickness of each stacking element is, for example, 0.2 mm to 0.5 mm.

The stator core 50 has a yoke 52 having an annular shape about the axis Ax and a plurality of teeth 51 extending from the yoke 52 toward its inner side in the radial direction. The teeth 51 are arranged at equal intervals in the circumferential direction. The number of teeth 51 is 12 in this example, but is not limited to 12. A slot 53, which is a space to house the coil 55, is formed between adjacent teeth 51.

A tip portion of the tooth 51 on the inner side in the radial direction is wider in the circumferential direction than any other portion of the tooth 51. The tip portion of the tooth 51 faces an outer circumference of the rotor 1 via the air gap G described above.

An insulating portion 54 is attached to the stator core 50. The insulating portion 54 is interposed between the stator core 50 and the coil 55 and serves to insulate the stator core 50 and the coil 55 from each other. The insulating portion 54 is formed by integrally molding a resin with the stator core 50 or by mounting a resin molded body as a separate component to the stator core 50.

The insulating portion 54 is made of an insulating resin, such as polybutylene terephthalate (PBT), polyphenylene sulfide (PPS), liquid crystal polymer (LCP), or polyethylene terephthalate (PET). The insulating portion 54 can also be formed by an insulating resin film of 0.035 to 0.4 mm in thickness.

The coil 55 is wound around the tooth 51 via the insulating portion 54. The coil 55 includes a conductor made of copper or aluminum and a coating covering the conductor. The winding method of the coil 55 may be either concentrated winding or distributed winding.

### (Configuration of Rotor)

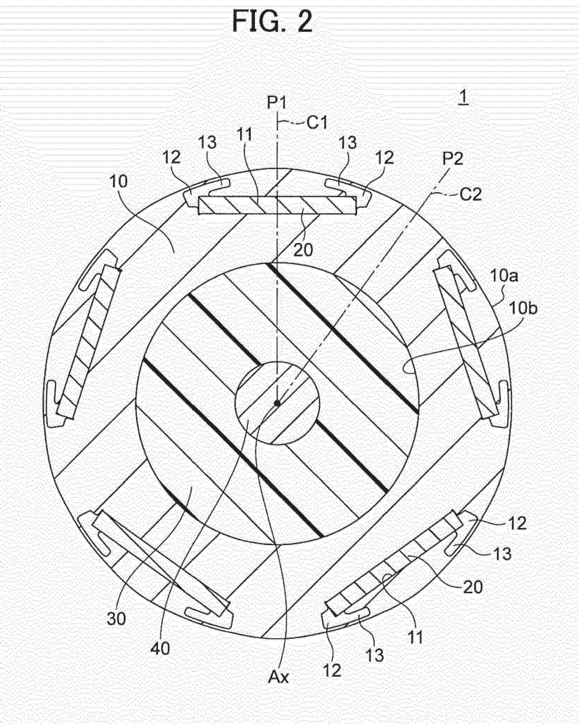

FIG. 2 is a cross-sectional view illustrating the rotor 1. The rotor 1 has a rotary shaft 40, an annular rotor core 10 that surrounds the rotary shaft 40 from outside in the radial direction, and a resin portion 30 provided between them.

The rotary shaft 40 is a shaft whose center axis is the above-described axis Ax. The rotary shaft 40 is made of a metal, such as iron, nickel (Ni) or chromium (Cr).

The resin portion 30 supports the rotor core 10 with respect to the rotary shaft 40 and is made of a non-magnetic material, more specifically, a thermoplastic resin such as PBT. The resin portion 30 is formed by molding the rotor core 10 and the rotary shaft 40 with resin. In this regard, the resin portion 30 may be provided with ribs or cavities.

The resin portion 30 is provided between the rotor core 10 and the rotary shaft 40 in this example. However, instead of providing the resin portion 30, the rotary shaft 40 may be fitted into a shaft hole formed in the rotor core 10.

The rotor core 10 is formed of magnetic stacking elements which are stacked in the axial direction and fixed together by crimping or the like. Each stacking element is made of a core material containing iron as a main component, for example, an electromagnetic steel sheet. The thickness of each stacking element is, for example, 0.2 to 0.5 mm. Both an outer circumference 10a and an inner circumference 10b of the rotor core 10 extend in the circumferential direction about the axis Ax.

A plurality of magnet insertion holes 11 are formed along the outer circumference 10a of the rotor core 10. The magnet insertion holes 11 are arranged at equal intervals in the circumferential direction. The magnet insertion hole 11 extends from one end to the other end of the rotor core 10 in the axial direction. The magnet insertion hole 11 extends linearly in a direction perpendicular to a line (i.e., a pole center line C1 described later) passing through the center of the magnetic insertion hole 11 in the circumferential direction and the axis Ax. The number of magnet insertion holes 11 is five in this example.

A permanent magnet 20 is disposed in each magnet insertion hole 11. The permanent magnet 20 is in the form of a flat plate and has a width in the circumferential direction and a thickness in the radial direction. The permanent magnet 20 is magnetized in its thickness direction. The permanent magnet 20 is formed of a rare earth magnet that contains, for example, neodymium (Nd) or samarium (Sm) as a main component. The permanent magnet 20 may also be formed of a ferrite magnet that contains iron as a main component.

A magnet magnetic pole P1 is formed by the permanent magnet 20. The permanent magnets 20 have their magnetic pole surfaces of the same polarity (for example, N-pole) facing the outer circumference 10a side of the rotor core 10. Consequently, in the rotor core 10, a virtual magnetic pole P2 is formed between adjacent permanent magnets 20, and the virtual magnetic pole P2 has the opposite polarity (for example, S-pole) to that of the permanent magnets 20.

That is, the rotor 1 has five magnet magnetic poles P1 and five virtual magnetic poles P2 that are arranged alternately in the circumferential direction. Thus, the number of poles in the rotor 1 is 10. Such a rotor structure is called a consequent-pole type. The number of poles in the rotor 1 is not limited to 10, but may be any even number.

When the number of poles in the rotor 1 is N (N is an even number), the number of magnet magnetic poles P1 is expressed as N/2, and the number of virtual magnetic poles P2 is also expressed as N/2. The magnet magnetic pole P1 is also referred to as a first magnetic pole, and the virtual magnetic pole P2 is also referred to as a second magnetic pole.

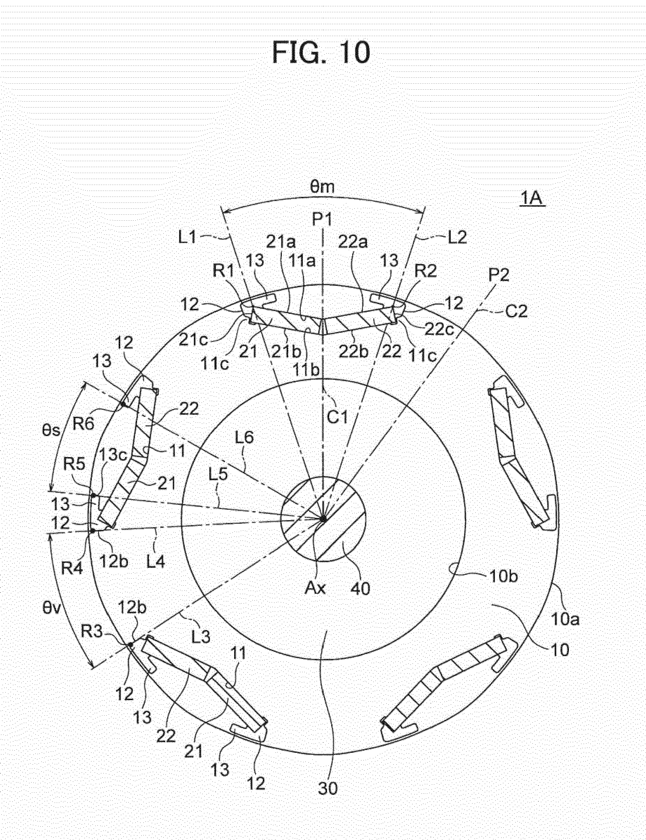

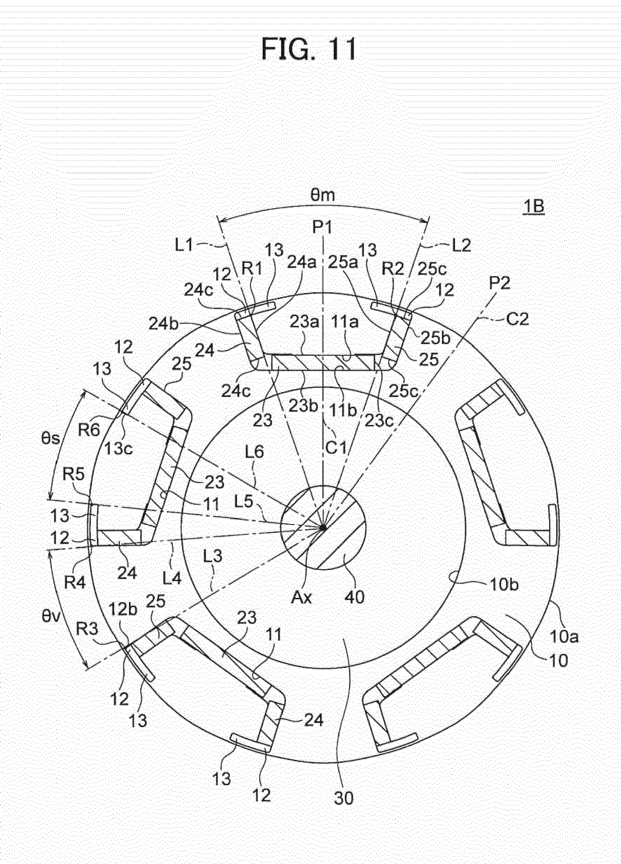

In this example, one permanent magnet 20 is disposed in each magnet insertion hole 11 so that the one permanent magnet 20 constitutes the magnet magnetic pole P1. However, two or more permanent magnets may be disposed in each magnet insertion hole 11 so that these two or more permanent magnets constitute the magnet magnetic pole P1 (see FIGS. 10 and 11). The permanent magnet 20 does not necessarily have to be in the form of a flat plate.

The center of the magnet magnetic pole P1 in the circumferential direction, i.e., the center of the magnet insertion hole 11 in the circumferential direction, is the pole center of the magnet magnetic pole P1. The line passing through the pole center of the magnet magnetic pole P1 and the axis Ax is referred to as the pole center line C1. Similarly, the center of the virtual magnetic pole P2 in the circumferential direction is the pole center of the virtual magnetic pole P2. The line passing through the pole center of the virtual magnetic pole P2 and the axis Ax is referred to as a pole center line C2.

The outer circumference 10a of the rotor core 10 has the so-called flower-like circular shape, i.e., a shape in which the outer diameter is maximum at the pole centers of the magnetic poles P1 and P2 and minimum at inter-pole portions each between the magnetic poles P1 and P2. However, the shape of the outer circumference 10a of the rotor core 10 is not limited to the flower-like circular shape and may be circular, for example.

In the consequent-pole type rotor 1, the magnetic flux passing through the virtual magnetic pole P2 tends to flow to the rotary shaft 40 because no actual magnet is present at the virtual magnetic pole P2. The resin portion 30 disposed between the rotor core 10 and the rotary shaft 40 serves to suppress magnetic flux leakage to the rotary shaft 40.

Flux barriers 12, which are openings, are formed on both ends of the magnet insertion hole 11 in the circumferential direction. A thin-walled portion is formed between the outer circumference 10a of the rotor core 10 and the flux barrier 12. The thickness of the thin-walled portion in the radial direction is desirably equal to the thickness of each stacking element of the rotor core 10 in order to suppress magnetic flux leakage between adjacent magnetic poles.

The virtual magnetic pole P2 described above is formed between the flux barriers 12 of the adjacent magnet insertion holes 11. That is, the flux barrier 12 defines each end of the virtual magnetic pole P2 in the circumferential direction. Thus, the above-described pole center line C2 of the virtual magnetic pole P2 is a line passing through the axis Ax and a middle position in the circumferential direction between the two flux barriers 12 located on both sides of the virtual magnetic pole P2.

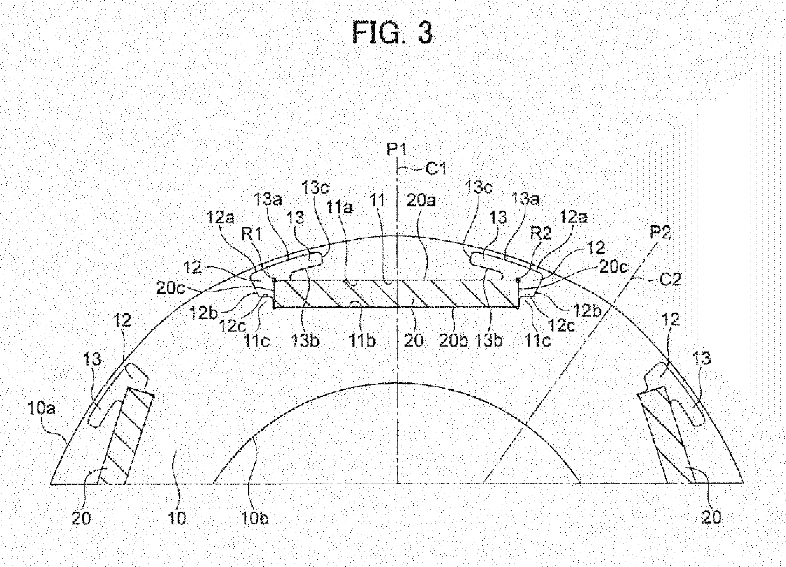

FIG. 3 is an enlarged cross-sectional view illustrating the rotor 1. In this regard, in FIG. 3, FIGS. 4 to 8, and FIGS. 10 to 13 described later, the hatching of the rotor core 10 and the resin portion 30 is omitted. As illustrated in FIG. 3, the permanent magnet 20 has a magnetic pole surface 20a on the outer circumference 10a side, a magnetic pole surface 20b on the inner circumference 10b side, and end surfaces 20c on both sides in the circumferential direction. Both the magnetic pole surfaces 20a and 20b extend in a direction perpendicular to the pole center line C1.

The magnet insertion hole 11 has an outer edge 11a on the outer circumference 10a side and an inner edge 11b on the inner circumference 10b side. Both the outer edge 11a and the inner edge 11b extend in the direction perpendicular to the pole center line C1. Stepped portions 11c are formed on both ends of the inner edge 11b of the magnet insertion holes 11.

The outer edge 11a of the magnet insertion hole 11 faces the magnetic pole surface 20a of the permanent magnet 20, while the inner edge 11b of the magnet insertion hole 11 faces the magnetic pole surface 20b of the permanent magnet 20. The two stepped portions 11c of the magnet insertion hole 11 face the end surfaces 20c of the permanent magnet 20. Thus, the permanent magnet 20 is positioned within the magnet insertion hole 11.

The flux barrier 12 has an outer edge 12a extending along the outer circumference 10a of the rotor core 10, a side edge 12b which is an edge on the virtual magnetic pole P2 side, and a base edge 12c which extends between the side edge 12b and the stepped portion 11c.

A slit 13 serving as a non-magnetic portion is formed between the magnet insertion hole 11 and the outer circumference 10a of the rotor core 10 in the radial direction. In this example, two slits 13 are formed on both sides of the pole center line C1. The slit 13 extends in the circumferential direction.

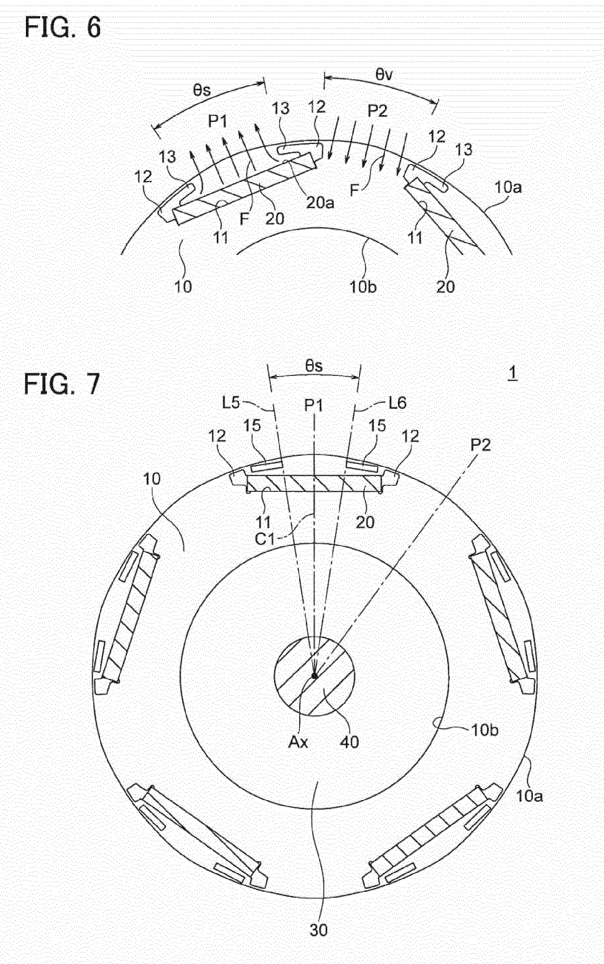

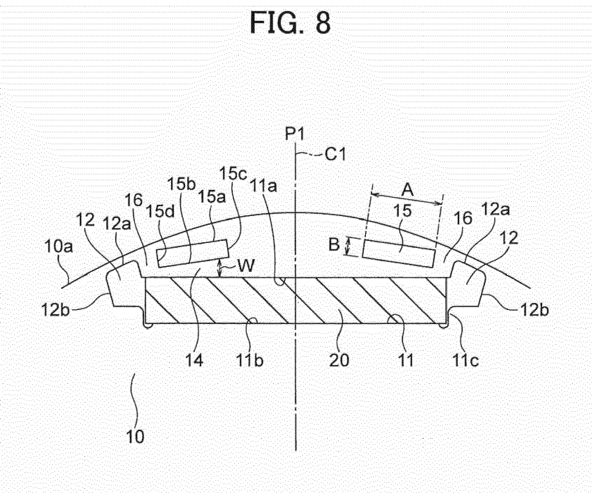

The slit 13 is desirably formed on the pole center line C1 side of the flux barrier 12, continuously with the flux barrier 12. An example in which the slit 13 is spaced apart from the flux barrier 12 will be described with reference to FIGS. 7 and 8.

The corner between the magnetic pole surface 20a and the end surface 20c of the permanent magnet 20 on one side (on the left side in FIG. 3) of the pole center line C1 of each magnet magnetic pole P1 is defined as a corner R1. The corner between the magnetic pole surface 20a and the end surface 20c of the permanent magnet 20 on the other side (on the right side in FIG. 3) of the pole center line C1 is defined as a corner R2.

The corner R1 corresponds to the corner facing the outer circumference 10a of the rotor core 10 and located farthest from the pole center line C1 on one side of the pole center line C1. The corner R2 corresponds to the corner of the permanent magnet 20 facing the outer circumference 10a of the rotor core 10 and located farthest from the pole center line C1 on the other side of the pole center line C1.

Each of the corners R1 and R2 of the permanent magnet 20 is located in a space enclosed by the outer edge 12a, the side edge 12b, and the base edge 12c of the flux barrier 12. The corner R1 is also referred to as a first corner, and the corner R2 is also referred to as a second corner.

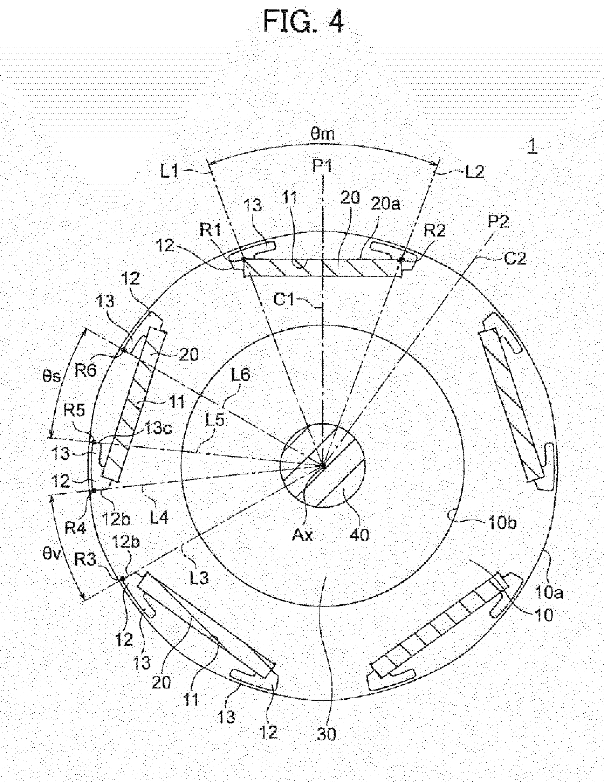

FIG. 4 is a diagram for explaining the arrangement of the magnet magnetic poles P1 and the virtual magnetic poles P2 in the rotor 1. The line passing through the corner R1 of the permanent magnet 20 and the axis Ax is defined as a line L1. Similarly, the line passing through the corner R2 of the permanent magnet 20 and the axis Ax is defined as a line L2.

An angle between the line L1 and the line L2 is defined as an angle θm. The angle θm represents the extent in the circumferential direction occupied by the permanent magnet 20, expressed in terms of angle.

If the number of poles in the rotor 1 is represented by N (N is an even number), the angle θm satisfies θm ≥ 360/N. When the number of poles N is 10, 360/N is 36 [degrees], and the angle θm only needs to be 36 [degrees] or more. The angle θm is 40 [degrees], for example.

That is, in this embodiment, the extent occupied by the permanent magnet 20 is greater than or equal to an angle obtained by equally dividing 360 [degrees] by the number of poles N (i.e., 360/N [degrees]).

At the side edge 12b of one of the two flux barriers 12 that are adjacent to each other in the circumferential direction across the virtual magnetic pole P2, the point closest to the outer circumference 10a is defined as a point R3. The point closest to the outer circumference 10a at the side edge 12b of the other flux barrier 12 is defined as a point R4.

The line passing through the point R3 and the axis Ax is defined as a line L3, and the line passing through the point R4 and the axis Ax is defined as a line L4. An angle between the line L3 and the line L4 is defined as an angle θv. The angle θv represents the extent in the circumferential direction occupied by the virtual magnetic pole P2, expressed in terms of angle.

The angle θv satisfies θv < 360/N and also satisfies θv < θm. The angle θv is 30 degrees, for example. That is, the angle θv occupied by the virtual magnetic pole P2 is smaller than the angle θm occupied by the permanent magnet 20.

The above-described one flux barrier 12 is also referred to as a first opening, and the other flux barrier 12 described above is also referred to as a second opening. The point R3 is also referred to as a third point, and the point R4 is also referred to as a fourth point.

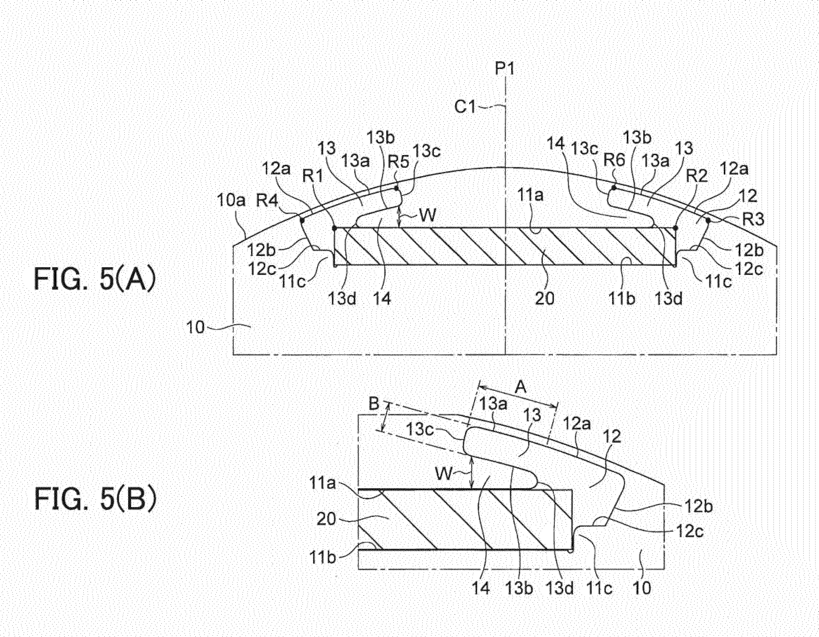

FIG. 5(A) is an enlarged diagram illustrating the magnet magnetic pole P1. FIG. 5(B) is an enlarged diagram illustrating a region including an end of the permanent magnet 20. As described above, the slits 13 are formed on both sides of the pole center line C1 of the magnet magnetic pole P1. A region between two slits 13 is also referred to as an inter-slit region.

The slit 13 has an outer edge 13a extending along the outer circumference 10a of the rotor core 10, an inner edge 13b facing the outer edge 13a in the radial direction, and a tip edge 13c formed on the pole center line C1 side of the edges 13a and 13b.

The outer edge 13a of the slit 13 extends on an extension line of the outer edge 12a of the flux barrier 12 in this example. A curved portion 13d is formed between the inner edge 13b of the slit 13 and the outer edge 11a of the magnet insertion hole 11.

As illustrated in FIG. 5(B), the slit 13 has a length A in the circumferential direction and a width B in the radial direction. The length A and the width B have the relationship of A > B. In this regard, the length A is a distance from the tip edge 13c to the curved portion 13d of the slit 13. The width B is a distance between the outer edge 13a and the inner edge 13b.

A core region 14 is formed between the inner edge 13b of the slit 13 and the outer edge 11a of the magnet insertion hole 11. The core region 14 constitutes a part of a magnetic path from the permanent magnet 20 to the inter-slit region. The core region 14 has a width W in the radial direction. The width W is a distance in the radial direction between the inner edge 13b of the slit 13 and the outer edge 11a of the magnet insertion hole 11.

The inner edge 13b of the slit 13 extends along the outer circumference 10a of the rotor core 10, and thus the distance from the outer edge 11a of the magnet insertion hole 11 to the slit 13 increases as the distance from the pole center line C1 decreases. Thus, the width W of the core region 14 in the radial direction increases as the distance from the pole center line C1 decreases.

As illustrated in FIG. 4, the point closest to the outer circumference 10a at the tip edge 13c of one of the two slits 13 of the magnet magnetic pole P1 is defined as a point R5. The point closest to the outer circumference 10a at the tip edge 13c of the other slit 13 is defined as a point R6. The line passing through the point R5 and the axis Ax is defined as a line L5, and the line passing through the point R5 and the axis Ax is defined as a line L6.

An angle between the line L5 and the line L6 is defined as an angle θs. The angle θs represents the extent in the circumferential direction occupied by the inter-slit region, expressed in terms of angle. The angle θs is smaller than the angle θm described above. Therefore, θs < θm is satisfied, and θs ≤ 360/N [degrees] is also satisfied. The angle θs is 25 degrees, for example.

The above-described one slit 13 is also referred to as a first non-magnetic portion, and the other slit 13 is also referred to as a second non-magnetic portion. The point R5 is also referred to as a first point, and the point R6 is also referred to as a second point.

### (Action)

Next, the action of the first embodiment will be described. As the area of the magnetic pole surface 20a of the permanent magnet 20 increases, the amount of magnetic flux emitted from the magnetic pole surface 20a increases, and the magnetic force increases. However, when the length of the permanent magnet 20 in the axial direction is increased, the length of the motor 2 in the axial direction also increases, leading to an increase in the size of the motor 2 or in the manufacturing cost. Therefore, it is desirable to increase the area of the magnetic pole surface 20a of the permanent magnet 20 per unit length in the axial direction.

In the first embodiment, the angle θm occupied by the permanent magnet 20 is 360/N [degrees] or more. Thus, the width of the magnetic pole surface 20a of the permanent magnet 20 is made wider, so that the area of the magnetic pole surface 20a of the permanent magnet 20 per unit length in the axial direction can be increased. Thus, the amount of magnetic flux emitted from the magnetic pole surface 20a can be increased, and the magnetic force of the permanent magnet 20 can be increased.

In a non-consequent-pole type rotor in which permanent magnets are disposed in all magnetic poles, if the angle θm is set to 360/N [degrees] or more, adjacent permanent magnets interfere with each other. Therefore, the angle θm is set to less than 360/N [degrees] .

In contrast, the rotor 1 of the first embodiment is of the consequent-pole type, and no permanent magnet is disposed in each virtual magnetic pole P2. Thus, the angle θm occupied by the permanent magnet 20 can be set to 360/N [degrees] or more.

In the first embodiment, the magnetic force can be increased without lengthening the permanent magnet 20 in the axial direction, and thus the output power of the motor 2 can be increased while suppressing an increase in the manufacturing cost of the motor 2.

In addition, since the area of the magnetic pole surface 20a of the permanent magnet 20 per unit length in the axial direction is increased, the length of the motor 2 in the axial direction that is required to obtain the same magnetic force can be shortened. As a result, the amount of the core material used for the rotor core 10 and the stator core 50 can be reduced, and the entire length of the coil 55 can be reduced. That is, the manufacturing cost of the motor 2 can be reduced, and the motor efficiency can be improved.

When the angle θm of the permanent magnet 20 exceeds 720/N [degrees], it is not possible to secure a space to form the virtual magnetic pole P2 between adjacent permanent magnets 20. Thus, the angle θm is set to satisfy 360/N [degrees] ≤ θm < 720/N [degrees].

When the angle θm is set to 360/N [degrees] or more as described above, the angle θm occupied by the permanent magnet 20 is made greater than the angle θv occupied by the virtual magnetic pole P2 (i.e., θm > θv). Thus, assuming that the magnet magnetic pole P1 is the N pole while the virtual magnetic pole P2 is the S pole, the width of the N pole is made wider than the width of the S pole on the surface of the rotor 1.

If the difference in width between the N and S poles on the surface of the rotor 1 is large, it may cause vibration and noise. For this reason, the rotor 1 of the first embodiment has two slits 13 on both sides of the pole center line C1 of the magnet magnetic pole P1 so as to restrict the magnetic path. Each slit 13 is elongated in the circumferential direction. This shape is suitable for controlling the flow of magnetic flux.

FIG. 6 is a schematic diagram for explaining the flow of magnetic flux in the magnet magnetic pole P1 and the virtual magnetic pole P2 in the rotor 1. Here, a description will be given assuming that the magnetic pole surface 20a of the permanent magnet 20 in the magnet magnetic pole P1 is the N pole.

The magnetic flux emitted from the magnetic pole surface 20a of the permanent magnet 20 is directed to the outer circumference 10a of the rotor core 10. The slits 13 formed on the outer circumference 10a side of the magnet insertion hole 11 prevent the passing of the magnetic flux because the slits 13 are filled with air or other non-magnetic material.

Thus, the magnetic flux emitted from the magnetic pole surface 20a of the permanent magnet 20 is directed to the stator 5 through the region between the two slits 13, i.e., the inter-slit region. The angle occupied by the inter-slit region is the angle θs described above. This angle θs is smaller than the angle θm occupied by the permanent magnet 20. That is, the slits 13 have the role of squeezing the flow of magnetic flux emitted from the magnetic pole surface 20a of the permanent magnet 20.

By bringing the angle θs of the inter-slit region of the magnet magnetic pole P1 closer to the angle θv of the virtual magnetic pole P2, the widths of the N and S poles on the surface of the rotor 1 can be made closer to equal. Thus, vibration and noise caused by the difference in width between the N and S poles can be reduced.

When the angle θs of the inter-slit region of the magnet magnetic pole P1 is equal to the angle θv of the virtual magnetic pole P2 (i.e., θs = θv is satisfied), the difference in width between the N and S poles is minimum.

However, since there is no magnet insertion hole in each virtual magnetic pole P2, if the angle θs of the inter-slit region of the magnet magnetic pole P1 is set equal to the angle θv of the virtual magnetic pole P2, the core amount of the virtual magnetic pole P2 is greater than that of the magnet magnetic pole P1, and therefore a magnetic attractive force between the rotor 1 and the stator 5 increases in the virtual magnetic pole P2. The core amount refers to the amount of core material such as electromagnetic steel sheets.

In contrast, when θv < θs is satisfied, the core amount of the magnet magnetic pole P1 and the core amount of the virtual magnetic pole P2 can be made closer to each other, whereby vibration caused by the difference in magnetic attractive force between these poles can be reduced. For these reasons, the angle θs of the inter-slit region of the magnet magnetic pole P1 and the angle θv of the virtual magnetic pole P2 desirably satisfy θv ≤ θs.

Two slits 13 are formed on both sides of the pole center line C1 in this example, but the number of slits 13 may be one because a single slit 13 can also restrict the magnetic path.

The core region 14 illustrated in FIG. 5(B) constitutes a part of the magnetic path from the magnetic pole surface 20a of the permanent magnet 20 to the inter-slit region. When the magnetic flux emitted from the magnetic pole surface 20a of the permanent magnet 20 flows through the inter-slit region, the amount of magnetic flux increases as the distance from the pole center line C1 decreases.

Since the width W of the core region 14 in the radial direction increases as the distance from the pole center line C1 decreases, the local concentration of the magnetic flux and the resulting magnetic saturation can be suppressed. Thus, the magnetic flux of the permanent magnet 20 can be used effectively.

FIG. 7 is a cross-sectional view illustrating another configuration example of the rotor 1. FIG. 8 is an enlarged diagram illustrating a magnet magnetic pole P1 of the rotor 1 illustrated in FIG. 7. As illustrated in FIG. 7, in this configuration example, slits 15 are formed on both sides of the pole center line C1 of each magnet magnetic pole P1, and each slit 15 is spaced apart from the flux barrier 12.

As illustrated in FIG. 8, the slit 15 has an outer edge 15a on the outer circumference 10a side of the rotor core 10, an inner edge 15b on the magnet insertion hole 11 side, a tip edge 15c on the pole center line C1 side, and a base edge 15d on the flux barrier 12 side. The slit 15 has a length A in the circumferential direction and a width B in the radial direction. The length A and the width B have the relationship of A > B.

Each slit 15 exhibits the function of restricting the magnetic path in the magnet magnetic pole P1, and an inter-slit region is formed between the two slits 15. The angle occupied by the inter-slit region is the angle θs described above. Meanwhile, since the slit 15 is formed separately from the flux barrier 12, a bridge portion 16 is formed between the slit 15 and the flux barrier 12.

Thus, the magnetic flux emitted from the magnetic pole surface 20a of the permanent magnet 20 does not only pass through the inter-slit region but also passes through the bridge portion 16. That is, the function of restricting the magnetic path in the magnet magnetic pole P1 is reduced by the magnetic flux flowing through the bridge portion 16.

In contrast, when the slit 13 is formed continuously with the flux barrier 12 as illustrated in FIGS. 1 to 6, an exit through which the magnetic flux flows from the rotor 1 toward the stator 5 is restricted to the inter-slit region, and thus the slit 13 can effectively exhibit the function of restricting the magnetic path in the magnet magnetic pole P1.

The case where the magnet magnetic pole P1 is the N pole has been described, but the same goes for a case where the magnet magnetic pole P1 is the S pole. Since the flux barrier 12 is a part of the magnet insertion hole 11, the slit 13 can be said to be formed continuously with the magnet insertion hole 11 in the configurations illustrated in FIGS. 1 to 6.

### (Configuration of Mold motor)

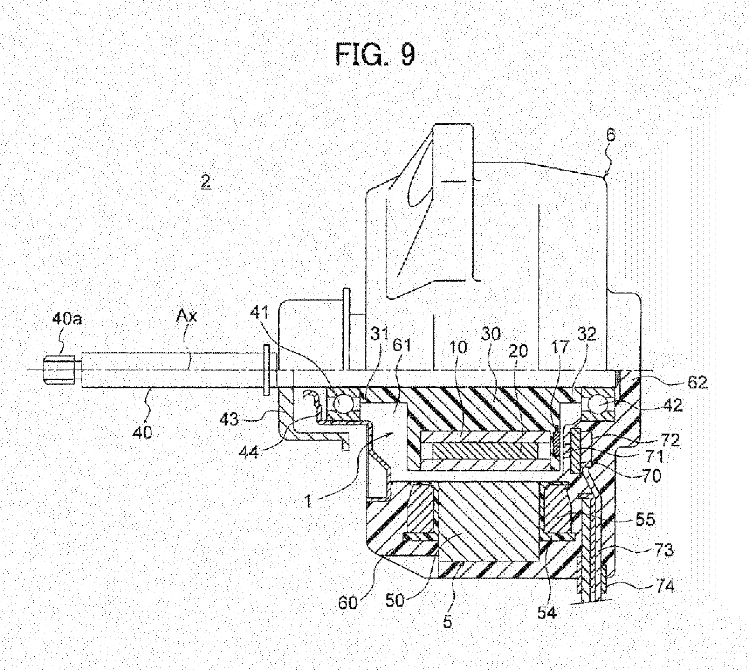

FIG. 9 is a longitudinal sectional view of a mold motor to which the motor 2 of the first embodiment is applied. The stator 5 is covered with a mold resin portion 60 to thereby constitute a mold stator 6.

The mold resin portion 60 is composed of a thermosetting resin such as Bulk Molding Compound (BMC), for example. The mold resin portion 60 has an opening 61 on its left side in FIG. 9 and a bearing support 62 on the opposite side. The rotor 1 is inserted through the opening 61 into a hollow portion inside the stator 5.

A metal bracket 44 is attached to the opening 61 of the mold resin portion 60. A bearing 41 is held by the bracket 44. A cap 43 is attached to the outside of the bracket 44 so as to prevent water or the like from entering the bearing 41. A bearing 42 is held by the bearing support 62. The rotary shaft 40 is supported by the bearings 41 and 42.

The rotary shaft 40 protrudes from the stator 5 toward the left side in FIG. 9. For example, an impeller of a blower is attached to a tip portion 40a of the rotary shaft 40. Thus, the protruding side of the rotary shaft 40 (left side in FIG. 9) is referred to as a "load side", while the opposite side (right side in FIG. 9) is referred to as a "counter-load side".

A circuit board 70 is disposed on the counter-load side of the stator 5. A magnetic sensor 71 and a drive circuit 72 for driving the motor 2 are mounted on the circuit board 70, and lead wires 73 are wired on the circuit board 70.

The lead wires 73 include power lead wires for supplying power to the coil 55 of the stator 5 and sensor lead wires for transmitting a signal of the magnetic sensor 71 to the outside. A lead wire outlet component 74 is attached to the outer circumferential portion of the mold resin portion 60 for drawing the lead wires 73 to the outside.

The resin portion 30 of the rotor 1 is provided between the rotor core 10 and the rotary shaft 40, and also covers both end surfaces of the rotor core 10 in the axial direction. A sensor magnet 17 is disposed on the counter-load side of the rotor core 10 and is held by the resin portion 30. The sensor magnet 46 is an annular magnet having the magnetic poles similar to those of the rotor 1.

The magnetic sensor 71 mounted on the circuit board 70 is constituted by, for example, a Hall IC and detects the magnetic flux of the sensor magnet 46. A drive circuit 72 detects the rotational position of the rotor 1 based on a detection signal of the magnetic sensor 71 and controls the current flowing through the coil 55. Instead of detecting the rotational position of the rotor 1, it is also possible to employ sensorless control in which the rotational position of the rotor 1 is detected based on the current flowing through the coil 55 or the like.

Although the stator 5 is covered with the mold resin portion 60 in this example, the stator 5 may be fitted into a metal shell.

### (Effects of Embodiment)

As described above, the rotor 1 of the first embodiment has the rotor core 10 and the permanent magnets 20, wherein N/2 (N is an even number) magnet magnetic poles P1 are formed by the permanent magnets 20 and N/2 virtual magnetic poles P2 are formed by the rotor core 10. The permanent magnet 20 has the corner R1 facing the outer circumference 10a of the rotor core 10 and located farthest from the pole center line C1 on one side of the pole center line C1, and the corner R2 facing the outer circumference 10a of the rotor core 10 and located farthest from the pole center line C1 on the other side of the pole center line C1. The angle θm between the line L1 passing through the corner R1 and the axis Ax and the line L2 passing through the corner R2 and the axis Ax satisfies θm ≥ 360/N [degrees].

With this configuration, the area of the magnetic pole surface 20a of the permanent magnet 20 per unit length in the axial direction can be increased, so that the magnetic force of the permanent magnet 20 can be increased. That is, the output of the motor 2 can be increased and the efficiency of the motor 2 can be enhanced, while suppressing an increase in the manufacturing cost of the motor 2.

The slit 13 extending in the circumferential direction and serving as the non-magnetic portion is formed between the permanent magnet 20 and the outer circumference 10a of the rotor core 10, and thus it is possible to restrict the magnetic path in the magnet magnetic pole P1. Thus, the difference in width between the N and S poles on the surface of the rotor 1 can be suppressed, and vibration and noise can be suppressed.

In particular, when the slit 13 is formed continuously with the magnet insertion hole 11, the effect of restricting the magnetic path in the magnet magnetic pole P1 can be enhanced, compared to when the slit 13 is formed separately from the magnet insertion hole 11.

The core region 14 is formed between the slit 13 and the magnet insertion hole 11, and the width W of the core region 14 increases as the distance from the pole center line C1 decreases, and thus it is possible to suppress the occurrence of magnetic saturation in the magnetic path from the magnetic pole surface 20a of the permanent magnet 20 to the inter-slit region.

When the point closest to the outer circumference 10a at the tip edge 13c of one of the two slits 13 for each magnet magnetic pole P1 is defined as a point R5, and the point closest to the outer circumference 10a at the tip edge 13c of the other slit 13 is defined as a point R6, the angle θs between the line L5 passing through the point R5 and the axis Ax and the line L6 passing through the point R6 and the axis Ax satisfies θs ≤ 360/N [degrees]. Thus, the widths of the N and S poles on the surface of the rotor 1 can be made closer to equal, and vibration and noise can be reduced.

When the point closest to the outer circumference 10a at the side edge 12b of one of the flux barriers 12 on both sides of the virtual magnetic pole P2 in the circumferential direction is defined as a point R3, and the point closest to the outer circumference 10a at the side edge 12b of the other flux barrier 12 is defined as a point R4, the angle θv between the line L4 passing through the point R3 and the axis Ax and the line L4 passing through the point R4 and the axis Ax satisfies θv ≤ θs. Therefore, the widths of the N and S poles on the surface of the rotor 1 can be made closer to equal and the variations in the magnetic attractive force between the rotor 1 and the stator 5 can be reduced, so that vibration and noise can be reduced.

### Modification 1.

FIG. 10 is a cross-sectional view illustrating a rotor 1A of a modification 1. In the rotor 1 of the first embodiment described above, one permanent magnet 20 is inserted in each magnet insertion hole 11. In contrast, in the rotor 1A of the modification 1, two permanent magnets 21 and 22 are inserted in each magnet insertion hole 11.

N/2 magnet insertion holes 11 are formed in a rotor core 10 of the rotor 1A. Each magnet insertion hole 11 has a V shape such that its center in the circumferential direction protrudes toward the inner circumference 10b side of the rotor core 10. With respect to the center of the magnet insertion hole 11 in the circumferential direction, the permanent magnet 21 is disposed on one side, while the permanent magnet 22 is disposed on the other side. The permanent magnet 21 is also referred to as a first permanent magnet, and the permanent magnet 22 is also referred to as a second permanent magnet.

The permanent magnet 21 has a magnetic pole surface 21a on the outer circumference 10a side, a magnetic pole surface 21b on the inner circumference 10b side, and end surfaces 21c on both sides in the circumferential direction. The permanent magnet 22 has a magnetic pole surface 22a on the outer circumference 10a side, a magnetic pole surface 22b on the inner circumference 10b side, and end surfaces 22c on both sides in the circumferential direction.

The magnet insertion hole 11 has an outer edge 11a on the outer circumference 10a side and an inner edge 11b on the inner circumference 10b side. Each of the outer edge 11a and the inner edge 11b extends to form the V shape. Stepped portions 11c are formed on both sides of the inner edge 11b in the circumferential direction.

The outer edge 11a of the magnet insertion hole 11 faces the magnetic pole surfaces 21a and 22a of the permanent magnet 21 and 22. The inner edge 11b of the magnet insertion hole 11 faces the magnetic pole surfaces 21b and 22b of the permanent magnet 21 and 22. The stepped portions 11c of the magnet insertion hole 11 face the corresponding end surfaces 21c and 22c located on the side away from the pole center line C1 among the end surfaces 21c and 22c of the permanent magnets 21 and 22.

The magnet magnetic pole P1 serving as the first magnetic pole is formed by the permanent magnets 21 and 22 disposed in each magnet insertion hole 11. The virtual magnetic pole P2 serving as the second magnetic pole is formed between adjacent magnet magnetic poles P1.

The pole center line C1 is a line passing through the axis Ax and the center of the magnet magnetic pole P1 in the circumferential direction, i.e., the center of the magnet insertion hole 11 in the circumferential direction. The pole center line C2 is a line passing through the axis Ax and the center of the virtual magnetic pole P2 in the circumferential direction.

The corner of the permanent magnet 21 between the magnetic pole surface 21a and the end surface 21c on the side away from the pole center line C1 is defined as a corner R1. The corner of the permanent magnet 22 between the magnetic pole surface 22a and the end surface 22c on the side away from the pole center line C1 is defined as a corner R2. Each of the corners R1 and R2 of the permanent magnets 21 and 22 is located in the flux barrier 12.

The corner R1 corresponds to the corner facing the outer circumference 10a of the rotor core 10 and located farthest from the pole center line C1 on one side (on the left side in FIG. 10) of the pole center line C1. The corner R2 corresponds to the corner facing the outer circumference 10a of the rotor core 10 and located farthest from the pole center line C1 on the other side (on the right side in FIG. 10) of the pole center line C1.

The angle between the line L1 passing through the corner R1 of the permanent magnet 20 and the axis Ax and the line L2 passing through the corner R2 and the axis Ax is defined as an angle θm. The angle θm represents the extent in the circumferential direction occupied by the permanent magnets 21 and 22, expressed in terms of angle.

As in the first embodiment, the angle θm satisfies θm ≥ 360/N. Since the angle θm is 360/N [degrees] or more, the area of each of the magnetic pole surfaces 21a and 22a of the permanent magnets 21 and 22 per unit length in the axial direction can be increased.

The slits 13 are formed on the outer circumference 10a side of the magnet insertion hole 11 as in the first embodiment. The angle θs of the inter-slit region and the angle θv of the virtual magnetic pole P2 are as described in the first embodiment.

Except for the above-described points, the rotor 1A of the modification 1 is configured in a similar manner to the rotor 1 of the first embodiment.

Although the example in which the magnet insertion hole 11 has the V shape has been described here, two permanent magnets 21 and 22 may be disposed in the linear magnet insertion hole 11.

As above, according to the modification 1, even in the rotor 1A in which two permanent magnets 21 and 22 are inserted in each magnet insertion hole 11, the areas of the magnetic pole surfaces 21a and 22a of the permanent magnets 21 and 22 per unit length in the axial direction can be increased and the magnetic force can be increased by setting the angle θm occupied by the permanent magnets 21 and 22 to 360/N [degrees] or more. Thus, the output of the motor 2 can be increased and the efficiency of the motor 2 can be enhanced, while suppressing an increase in the manufacturing cost of the motor 2.

### Modification 2.

FIG. 11 is a cross-sectional view illustrating a rotor 1B of a modification 2. In the rotor 1 of the first embodiment described above, one permanent magnet 20 is inserted in each magnet insertion hole 11. In contrast, in the rotor 1B of the modification 2, three permanent magnets 23, 24 and 25 are inserted in each magnet insertion hole 11.

N/2 magnet insertion holes 11 are formed in the rotor core 10 of the rotor 1B. The magnet insertion hole 11 has a center portion located at its center in the circumferential direction, and two inclined portions extending from both ends of the center portion toward the outer circumference 10a of the rotor core 10. The two inclined portions are inclined so that the interval between both inclined portions increases as the distance from the center portion increases. In other words, the magnet insertion hole 11 has a bathtub shape.

The permanent magnet 23 is disposed in the center portion of the magnet insertion hole 11, and the permanent magnets 24 and 25 are disposed in the two respective inclined portions of the magnet insertion hole 11. Both permanent magnets 24 and 25 are inclined so that the interval between both permanent magnets 24 and 25 increases as their distances from the permanent magnet 23 increase. In other words, the permanent magnets 23, 24, and 25 are arranged to form a bathtub shape. The permanent magnet 23 is also referred to as the first permanent magnet, the permanent magnet 24 is also referred to as the second permanent magnet, and the permanent magnet 25 is also referred to as a third permanent magnet.

The permanent magnet 23 has a magnetic pole surface 23a on the outer circumference 10a side, a magnetic pole surface 23b on the inner circumference 10b side, and end surfaces 23c on both ends in the circumferential direction. The permanent magnet 24 has a magnetic pole surface 24a on the pole center line side, a magnetic pole surface 24b on the opposite side thereto, and end surfaces 24c on both ends in the circumferential direction. The permanent magnet 25 has a magnetic pole surface 25a on the pole center line side, a magnetic pole surface 25b on the opposite side thereto, and end surfaces 25c on both ends in the circumferential direction.

The magnet insertion hole 11 has an outer edge 11a on the outer circumference 10a side and an inner edge 11b on the inner circumference 10b side. The outer edge 11a of the magnet insertion hole 11 faces the magnetic pole surfaces 23a, 24a, and 25b of the permanent magnets 23, 24 and 25. The inner edge 11b of the magnet insertion hole 11 faces the magnetic pole surfaces 23b, 24b, and 25b of the permanent magnets 23, 24 and 25. In this regard, stepped portions may be provided in the magnet insertion hole 11 so as to position the permanent magnets 23, 24, and 25.

The magnet magnetic pole P1 serving as the first magnetic pole is formed by the permanent magnets 23, 24 and 25 disposed in each magnet insertion hole 11. The virtual magnetic pole P2 serving as the second magnetic pole is formed between adjacent magnet magnetic poles P1.

The pole center line C1 is a line passing through the axis Ax and the center of the magnet magnetic pole P1 in the circumferential direction, i.e., the center of the magnet insertion hole 11 in the circumferential direction. The pole center line C2 is a line passing through the axis Ax and the center of the virtual magnetic pole P2 in the circumferential direction.

The corner of the permanent magnet 24 between the magnetic pole surface 24a and the end surface 24c on the side away from the pole center line C1 is defined as a corner R1. The corner of the permanent magnet 25 between the magnetic pole surface 25a and the end surface 25c on the side away from the pole center line C1 is defined as a corner R2. Each of the corners R1 and R2 of the permanent magnets 24 and 25 is located in the flux barrier 12.

The corner R1 corresponds to the corner facing the outer circumference 10a of the rotor core 10 and located farthest from the pole center line C1 on one side of the pole center line C1. The corner R2 corresponds to the corner facing the outer circumference 10a of the rotor core 10 and located farthest from the pole center line C1 on the other side of the pole center line C1.

The angle between the line L1 passing through the corner R1 of the permanent magnet 20 and the axis Ax and the line L2 passing through the corner R2 and the axis Ax is defined as an angle θm. The angle θm represents the extent in the circumferential direction occupied by the permanent magnets 23, 24 and 25, expressed in terms of angle.

As in the first embodiment, the angle θm satisfies θm ≥ 360/N. Since the angle θm is 360/N [degrees] or more, the area of each of the magnetic pole surfaces 23a, 24a, and 25a of the permanent magnets 23, 24 and 25 per unit length in the axial direction can be increased.

The slits 13 are formed on the outer circumference 10a side of the magnet insertion hole 11 as in the first embodiment. The angle θs of the inter-slit region and the angle θv of the virtual magnetic pole P2 are as described in the first embodiment.

Except for the above-described points, the rotor 1B of the modification 2 is configured in a similar manner to the rotor 1 of the first embodiment.

Although the example in which the magnet insertion hole 11 has a bathtub shape has been described here, three permanent magnets 23, 24, and 25 may be disposed in the linear magnet insertion hole 11.

As above, according to the modification 2, even in the rotor 1B in which the three permanent magnets 23, 24 and 25 are disposed in the magnet insertion hole 11, the areas of the magnetic pole surfaces 23a, 24a and 25a of the permanent magnets 23, 24 and 25 per unit length in the axial direction can be increased by setting the angle θm occupied by the permanent magnets 23, 24 and 25 to 360/N [degrees] or more. Thus, the output of the motor 2 can be increased and the efficiency of the motor 2 can be enhanced, while suppressing an increase in the manufacturing cost of the motor 2.

### Second Embodiment

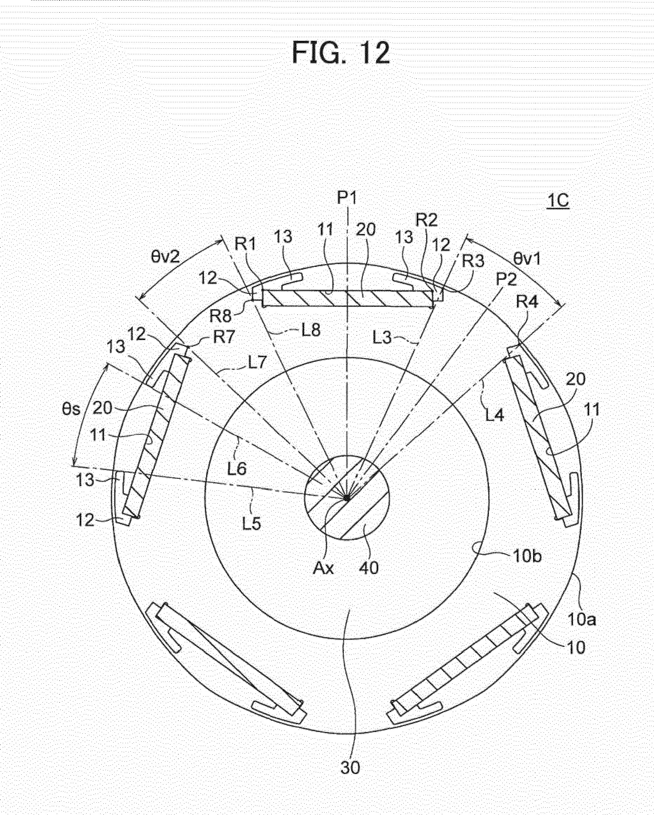

Next, a second embodiment will be described. FIG. 12 is a cross-sectional view illustrating a rotor 1C of the second embodiment. In the rotor 1C of the second embodiment, the width of the virtual magnetic pole P2 in the circumferential direction differs between the outer side thereof in the radial direction and the inner side thereof in the radial direction.

N/2 magnet insertion holes 11 are formed in the rotor core 10 of the rotor 1C. The shape of the magnet insertion hole 11 is as described in the first embodiment. One permanent magnet 20 is disposed in each magnet insertion hole 11. Flux barriers 12, which are openings, are formed at both ends of each magnet insertion hole 11 in the circumferential direction.

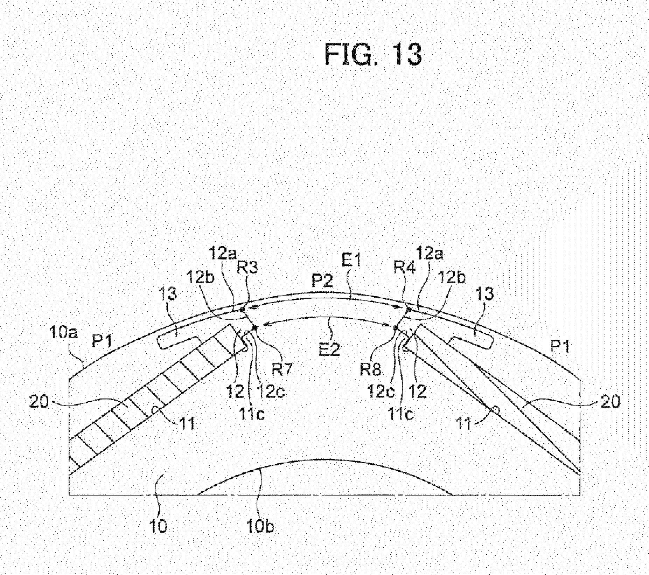

FIG. 13 is an enlarged diagram illustrating a part of the rotor 1C. As illustrated in FIG. 13, the flux barriers 12 are formed on both sides of the virtual magnetic pole P2. The flux barriers 12 define both ends of the virtual magnetic pole P2 in the circumferential direction.

The flux barrier 12 has an outer edge 12a extending along the outer circumference 10a of the rotor core 10, a side edge 12b which is an edge on the virtual magnetic pole P2 side, and a base edge 12c which extends between the side edge 12b and the stepped portion 11c.

The point closest to the outer circumference 10a at the side edge 12b of one of the two flux barriers 12 that are adjacent to each other across the virtual magnetic pole P2 is defined as a point R3. The point closest to the outer circumference 10a at the side edge 12b of the other flux barrier 12 is defined as a point R4.

The point closest to the inner circumference 10b at the side edge 12b of the above-described one flux barrier 12 is defined as a point R7. The point closest to the inner circumference 10b at the side edge 12b of the other flux barrier 12 is defined as a point R8.

A distance between the points R3 and R4 in the circumferential direction is defined as a distance E1. A distance between the points R7 and R8 in the circumferential direction is defined as a distance E2. The distances E1 and E2 have the relationship of E1 > E2. The distance E1 corresponds to the width of the virtual magnetic pole P2 on the outer side in the radial direction, and the distance E2 corresponds to the width of the virtual magnetic pole P2 on the inner side in the radial direction. Thus, the relationship of E1 > E2 means that the width of the virtual magnetic pole P2 in the circumferential direction is wider on the outer side in the radial direction than on the inner side in the radial direction.

This can also be expressed using the angle about the axis Ax as follows. As illustrated in FIG. 12, the line passing through the point R3 and the axis Ax is defined as a line L3, and the line passing through the point R4 and the axis Ax is defined as a line L4. The angle between the line L3 and the line L4 is defined as an angle θv1. This angle θv1 is an angle corresponding to the distance E1 above.

The line passing through the point R7 and the axis Ax is defined as a line L7, and the line passing through the point R8 and the axis Ax is defined as a line L8. The angle between the line L7 and the line L8 is defined as an angle θv2. This angle θv2 is an angle corresponding to the distance E2 above.

Each of the angles θv1 and θv2 is less than 360/N [degrees]. The angle θv1 and the angle θv2 have the relationship of θv1 > θv2. This corresponds to the above relationship of E1 > E2.

As described in the first embodiment, it is desirable to increase the angle θm occupied by the permanent magnet 20 in order to enlarge the area of the magnetic pole surface 20a of the permanent magnet 20 per unit length in the axial direction. However, when the angle θm is increased, the difference in width between the N and S poles on the surface of the rotor 1C increases.

In the second embodiment, the distance E1, which is the width of the virtual magnetic pole P2 on the outer side in the radial direction, is wider than the distance E2, which is the width of the virtual magnetic pole P2 on the inner side in the radial direction. By increasing the distance E1, the widths of the N and S poles on the surface of the rotor 1C can be made closer to equal. Further, by decreasing the distance E2, the width of the permanent magnet 20 can be made wider.

The slit 13 between the magnet insertion hole 11 and the outer circumference 10a of the rotor core 10, as well as the inter-slit region are as described in the first embodiment. The angle θs of the inter-slit region is desirably the angle θv1 or more, i.e., θv1 ≤ θs is desirably satisfied. Thus, the difference in width between the N and S poles on the surface of the rotor 1C can be reduced, and vibration caused by the difference in magnetic attractive force therebetween can be reduced.

Except for the above-described points, the rotor 1C of the second embodiment is configured in a similar manner to the rotor 1 of the first embodiment.

While the example in which one permanent magnet 20 is disposed in each magnet insertion hole 11 has been described here, two or more permanent magnets may be disposed in each magnet insertion hole 11, as described in the modifications 1 and 2.

As described above, according to the second embodiment, the distance between the flux barriers 12 on both sides of the virtual magnetic pole P2 in the circumferential direction is wider on the outer side in the radial direction than on the inner side in the radial direction. Thus, the area of the magnetic pole surface 20a of the permanent magnet 20 can be increased while reducing the difference in width between the N and S poles on the surface of the rotor 1C, and thus the magnetic force can be increased. Thus, the output of the motor 2 can be increased and the efficiency of the motor 2 can be enhanced, while suppressing an increase in the manufacturing cost of the motor 2.

### (Air Conditioner)

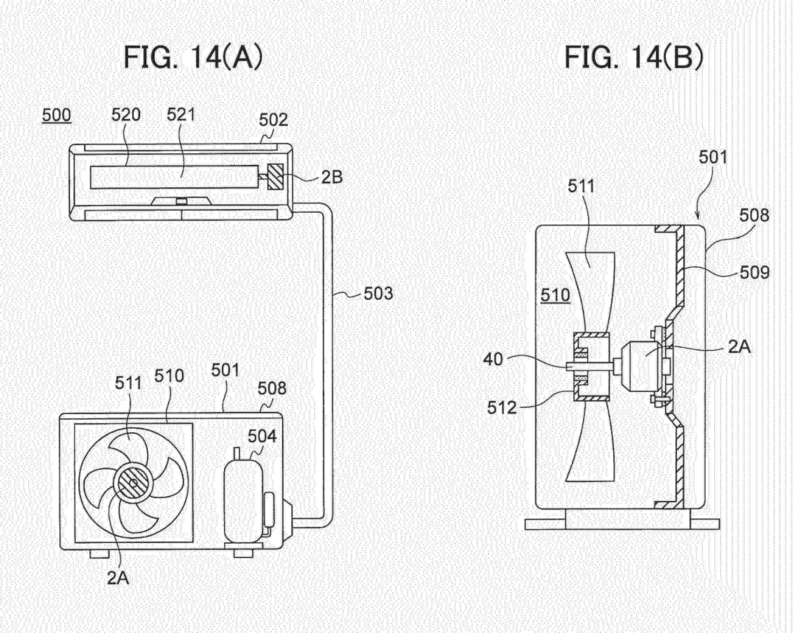

Next, the air conditioner to which the motor 2 of each of the above-described embodiments and modifications can be applied will be described. FIG. 14(A) is a diagram illustrating the configuration of an air conditioner 500 to which the motor 2 of the first embodiment is applied. The air conditioner 500 includes an outdoor unit 501 and an indoor unit 502. The outdoor unit 501 and the indoor unit 502 are connected by a refrigerant pipe 503.

The outdoor unit 501 includes an outdoor fan 510, which is a propeller fan, for example, and the indoor unit 502 includes an indoor fan 520, which is a cross-flow fan, for example. The outdoor fan 510 has an impeller 511 and a motor 2A provided to drive the impeller 511. The indoor fan 520 has an impeller 521 and a motor 2B provided to drive the impeller 521. Each of the motors 2A and 2B is constituted by the motor 2 described in the first embodiment. FIG. 14(A) also illustrates a compressor 504 that compresses a refrigerant.

FIG. 14(B) is a sectional view illustrating the outdoor unit 501. The motor 2A is supported by a frame 509 disposed inside a housing 508 of the outdoor unit 501. The impeller 511 is attached to the rotary shaft 40 of the motor 2A via a hub 512.

In the outdoor fan 510, the impeller 511 is rotated by the motor 2A to blow air outdoors. During a cooling operation of the air conditioner 500, the heat released when the refrigerant compressed by the compressor 504 condenses in a condenser (not illustrated) is released outdoors by the airflow from the outdoor fan 510.

In the indoor fan 520 (FIG. 14(A)), the impeller 521 is rotated by the motor 2B to blow air indoors. During the cooling operation of the air conditioner 500, the air deprived of heat when the refrigerant evaporates in an evaporator (not illustrated) is blown indoors by the airflow of the indoor fan 520.

Each of the motors 2A and 2B is constituted by the motor 2 of the first embodiment and thus higher output can be obtained. Thus, the operation efficiency of the outdoor fan 510 and the indoor fan 520 can be improved.

The motors 2A and 2B are not limited to the motor 2 of the first embodiment and may be the motor of the second embodiment or each modification. The motor of each of the embodiments and modifications is used for each of both the outdoor fan 510 and the indoor fan 520 in this example, but it may be used for only one of the outdoor fan 510 and the indoor fan 520.

The motor 2 described in each embodiment is not limited to use in fans and may be used for compressors in air conditioners or electrical equipment other than air conditioners, such as household electrical equipment, ventilation fans, and machine tools.

Although the desired embodiments have been specifically described above, various modifications and changes can be made to these embodiments.

### DESCRIPTION OF REFERENCE CHARACTERS

1, 1A, 1B, 1C: rotor; 2, 2A, 2B: motor; 3: rotor; 5: stator; 6: mold stator; 10: rotor core; 10a: outer circumference; 10b: inner circumference; 11: magnet insertion hole; 12: flux barrier; 13: slit; 14: core region; 15: slit; 20: permanent magnet; 21, 23: permanent magnet (first permanent magnet); 22, 24: permanent magnet (second permanent magnet); 25: permanent magnet (third permanent magnet); 20a, 21a, 22a, 23a, 24a, 25a: magnetic pole surface; 20b, 21b, 22b, 23b, 24b, 25b: magnetic pole surface; 30: resin portion; 40: rotary shaft; 50: stator core; 51: tooth; 52: yoke; 54: insulating portion; 55: coil; 60: mold resin portion; 500: air conditioner; 501: outdoor unit; 502: indoor unit; 510: outdoor fan; 511: impeller; 520: indoor fan; 521: impeller; Ax: axis; C1, C2: pole center line; P1: magnet magnetic pole; P2: virtual magnetic pole; R1: corner (first corner); R2: corner (second corner); R3: end (third end); R4: corner (fourth end); R5: end (first end); R6: end (second end); R7, R8: end.

## Claims

1. A rotor having N/2 (N is an even number) magnet magnetic poles and N/2 virtual magnetic poles, the rotor comprising:
a rotor core having an annular shape about an axis; and
a plurality of permanent magnets attached to the rotor core,
wherein each of the N/2 magnet magnetic poles is formed by at least one permanent magnet of the plurality of permanent magnets, and each of the N/2 virtual magnetic poles is formed by a part of the rotor core,
wherein a pole center line of each magnet magnetic pole is defined by a line passing through a center of the magnet magnetic pole in a circumferential direction of the rotor core and the axis,
wherein the at least one permanent magnet forming the magnet magnetic pole has a first corner facing an outer circumference of the rotor core and located farthest from the pole center line on one side of the pole center line, and a second corner facing the outer circumference and located farthest from the pole center line on the other side of the pole center line, and
wherein an angle θm between a line passing through the first corner and the axis and a line passing through the second corner and the axis satisfies θm ≥ 360/N [degrees].

2. The rotor according to claim 1, wherein the rotor core has a magnet insertion hole in which the at least one permanent magnet is disposed, and
wherein a non-magnetic portion extending in the circumferential direction is formed between the magnet insertion hole and the outer circumference of the rotor core.

3. The rotor according to claim 2, wherein the non-magnetic portion is formed continuously with the magnet insertion hole.

4. The rotor according to claim 2 or 3, wherein the rotor core has a core region between the non-magnetic portion and the magnet insertion hole in a radial direction about the axis, and
wherein a width of the core region in the radial direction increases as a distance from the pole center line decreases.

5. The rotor according to any one of claims 2 to 4, wherein the non-magnetic portion is a first non-magnetic portion, and the rotor core has a second non-magnetic portion located on a side opposite to the first non-magnetic portion across the pole center line, and
wherein, when a point of the first non-magnetic portion that is located closest to the pole center line and also closest to the outer circumference is defined as a first point, and a point of the second non-magnetic portion that is located closest to the pole center line and also closest to the outer circumference is defined as a second point, an angle θs between a line passing through the first point and the axis and a line passing through the second point and the axis satisfies θs ≤ 360/N [degrees].

6. The rotor according to claim 5, wherein the rotor core has a first opening and a second opening that are formed on both sides of the virtual magnetic pole in the circumferential direction, and
wherein, when a point of the first opening facing the second opening and located closest to the outer circumference is defined as a third point, and a point of the second opening facing the first opening and located closest to the outer circumference is defined as a fourth point, an angle θv between a line passing through the third point and the axis and a line passing through the fourth point and the axis satisfies θv ≤ θs [degrees].

7. The rotor according to any one of claims 2 to 6, wherein the rotor core has a first opening and a second opening that are formed on both sides of the virtual magnetic pole in the circumferential direction, and
wherein a distance between the first opening and the second opening in the circumferential direction is shorter on an inner side in a radial direction about the axis than on an outer end of the first opening and the second opening in the radial direction.

8. The rotor according to any one of claims 1 to 7, wherein the at least one permanent magnet forming each magnet magnetic pole comprises a first permanent magnet and a second permanent magnet that are disposed on both sides across the pole center line.

9. The rotor according to any one of claims 1 to 7, wherein the at least one permanent magnet forming each magnet magnetic pole comprises a first permanent magnet disposed on the pole center line, and a second permanent magnet and a third permanent magnet that are disposed on both sides of the first permanent magnet in the circumferential direction.

10. The rotor according to any one of claims 1 to 9, wherein the angle θm satisfies θm < 760/N [degrees].

11. The rotor according to any one of claims 1 to 10, further comprising:
a rotary shaft whose center axis serves as the axis; and
a non-magnetic resin portion connecting the rotary shaft and the rotor core.

12. A motor comprising:
the rotor according to any one of claims 1 to 11; and
a stator provided to surround the rotor.

13. A fan comprising:
the motor according to claim 12; and
an impeller driven to rotate by the motor.

14. An air conditioner comprising an indoor unit and an outdoor unit,
wherein at least one of the indoor unit and the outdoor unit has the fan according to claim 13.
